# FASCICULE DE BREVET EUROPEEN

(11) **EP 0 675 671 B1**
(45) Date de publication et mention de la délivrance du brevet: **17.07.2002**
(21) Numéro de dépôt: 95400593.0
(22) Date de dépôt: 17.03.1995
(51) Int. Cl.: H05B 6/06

(54) **Dispositif de commande et de contrôle automatiques de puissance pour un appareil de chauffage par induction et procédé de mise en oeuvre de ce dispositif**
Vorrichtung zur automatischen Leistungsregelung eines Induktionserwärmungsgeräts und Verfahren zum Betreiben der Vorrichtung
Device for automatic control of output power of an induction heating apparatus and method for operating the device

(30) Priorité: 31.03.1994 FR 9403862
(43) Date de publication de la demande: 04.10.1995
(73) Titulaire: MOULINEX S.A., 75008 Paris (FR)
(72) Inventeur: Malnoe, Michel Auguste, F-14670 Saint Samson (FR)
(74) Mandataire: Busquets, Jean-Pierre

(56) Documents cités:
- EP-A- 0 318 645
- WO-A-93/04527
- GB-A- 2 073 967
- GB-A- 2 162 384
- GB-A- 2 199 454
- US-A- 5 099 379
- INTERNATIONAL JOURNAL OF ELECTRONICS , vol. 67, no. 2, Août 1989 LONDON, GB, pages 277-296, XP 000072524 H. OMORI ET AL 'New single-ended resonant inverter circuit and system for induction-heating cooking apparatus '

## Description

La présente invention concerne un dispositif électronique de commande et de contrôle automatiques de puissance pour un générateur haute fréquence qui comprend un pont redresseur de tension, un circuit oscillant incorporant une bobine de chauffage d'une charge par induction et un interrupteur électronique de puissance, ledit dispositif comportant en outre des moyens de prélèvement du courant situés en aval dudit pont redresseur, des moyens de prélèvement de la tension branchés aux bornes du réseau d'alimentation dudit générateur haute fréquence, des moyens de prélèvement de la tension aux bornes de l'interrupteur électronique de puissance, un moyen de sélection par l'utilisateur de la puissance affichée à prélever au réseau, des moyens de définition de tensions de référence prédéterminées, des moyens de comparaison destinés à comparer la tension prélevée aux bornes de l'interrupteur électronique de puissance avec lesdites tensions de référence prédéterminées et associés à des moyens de mémorisation destinés à mémoriser temporairement le résultat de ladite comparaison, un moyen de commande de la commutation de l'interrupteur électronique de puissance, et un microcontrôleur destiné à piloter ledit moyen de commande de l'interrupteur électronique de puissance.

Dans les dispositifs et les méthodes de commande et de contrôle de puissance connus dans l'art antérieur, la régulation de puissance est déclenchée à la suite de la comparaison du courant d'alimentation du générateur haute fréquence, prélevé à l'entrée dudit générateur, avec des valeurs de courant de référence prédéterminées. Mais, du fait que ladite comparaison ne concerne que le courant prélevé à l'entrée du générateur haute fréquence, toute fluctuation de la tension d'alimentation à l'entrée dudit générateur se répercute inévitablement sur la puissance qu'il absorbe sans que le dispositif de commande et de contrôle ne puisse la détecter. Par conséquent, la puissance de chauffage délivrée par ledit générateur subit des variations non contrôlées entraînant notamment dans le cas d'une plaque chauffante par induction un dysfonctionnement du chauffage.

Le but de l'invention est de réaliser la régulation de la puissance d'un générateur fonctionnant à haute fréquence à l'aide d'un dispositif et d'un procédé qui tiennent compte à la fois des variations du courant et de la tension à l'entrée du générateur haute fréquence, ainsi que des variations des dimensions des charges à chauffer. Un autre but de l'invention est de réaliser la régulation de puissance à l'aide d'un nombre réduit de composants susceptibles d'être commandés de manière souple par un microcontrôleur et selon un procédé simple à mettre en oeuvre de manière automatique à l'aide d'un programme incorporé dans la mémoire du microcontrôleur destiné à régir le fonctionnement des différents circuits du dispositif de commande et de contrôle de puissance.

Selon l'invention, le microcontrôleur comporte des moyens de calcul CLP de la puissance moyenne absorbée par le générateur haute fréquence et des moyens de comparaison de puissance CMP en vue de comparer la puissance moyenne calculée pour lesdits moyens de calcul CLP avec la puissance affichée par l'utilisateur par le moyen de sélection.

Grâce à cette comparaison, on obtient une régulation de la puissance qui tient compte, non seulement, de toute fluctuation de la tension ou du courant d'alimentation, mais aussi de toute fluctuation de la charge à chauffer, telle que par exemple le changement de dimension de casseroles sur la plaque chauffante comportant la bobine.

D'autres caractéristiques et avantages de l'invention ressortiront d'ailleurs de la description qui va suivre, à titre d'exemple non limitatif, en référence aux dessins annexés dans lesquels :
- la figure 1 représente le schéma de principe du dispositif de commande et de contrôle de la puissance selon l'invention associé à un générateur haute fréquence connu en soi ;
- la figure 2 représente un schéma détaillé des circuits de prélèvement et de traitement électronique du courant et de la tension d'alimentation du générateur haute fréquence ;
- la figure 3 représente le schéma électrique général du dispositif de commande et de contrôle de puissance selon l'invention dans lequel on distingue :
   - un module M₁ comportant lesdits circuits de prélèvement et de traitement électronique du courant et de la tension d'alimentation du générateur haute fréquence ;
   - un module M₂ comportant des moyens de comparaison et de mémorisation ;
   - un module M₃ comportant un microcontrôleur ;
   - un module M₄ comportant un circuit de commande d'un interrupteur électronique de puissance ;

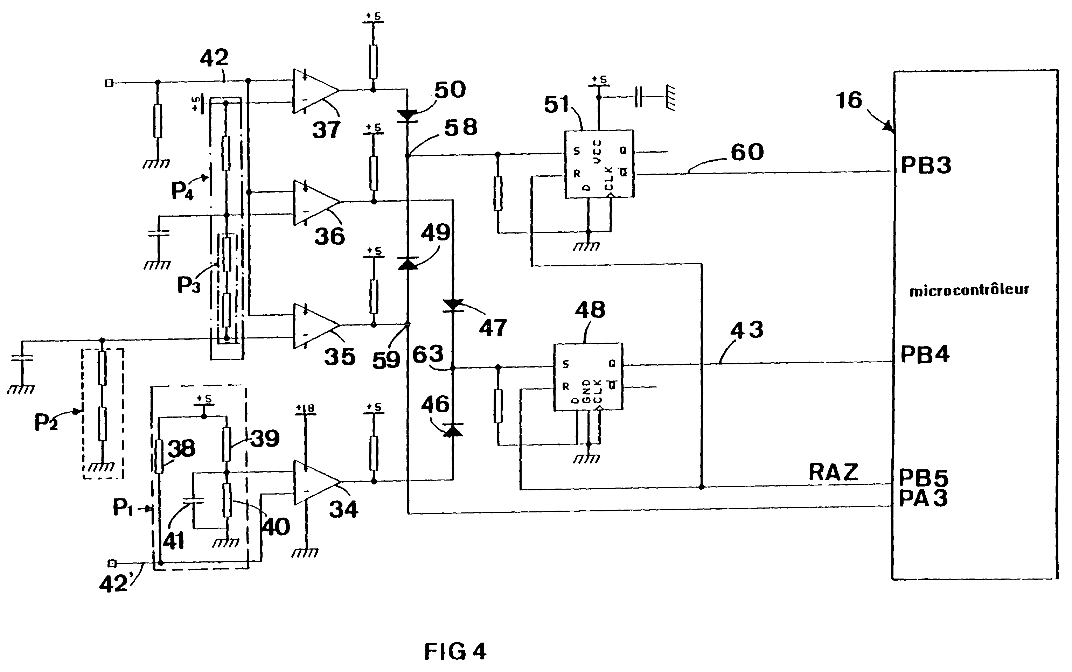

- la figure 4 représente un schéma détaillé du module M₂ selon l'invention ;

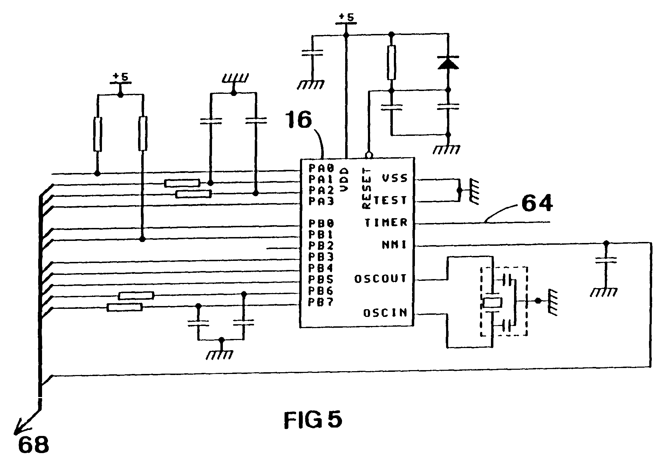

- la figure 5 représente un schéma détaillé du module M₃ selon l'invention ;

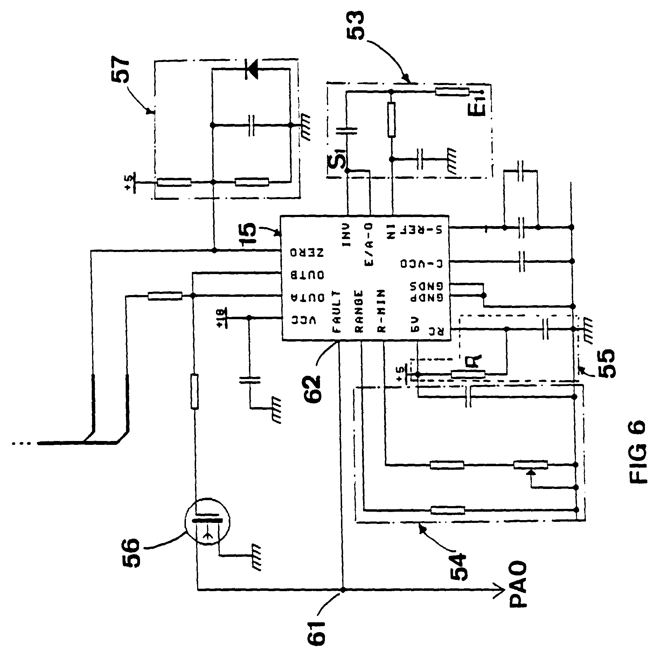

- la figure 6 représente un schéma détaillé du module M₄ selon l'invention.

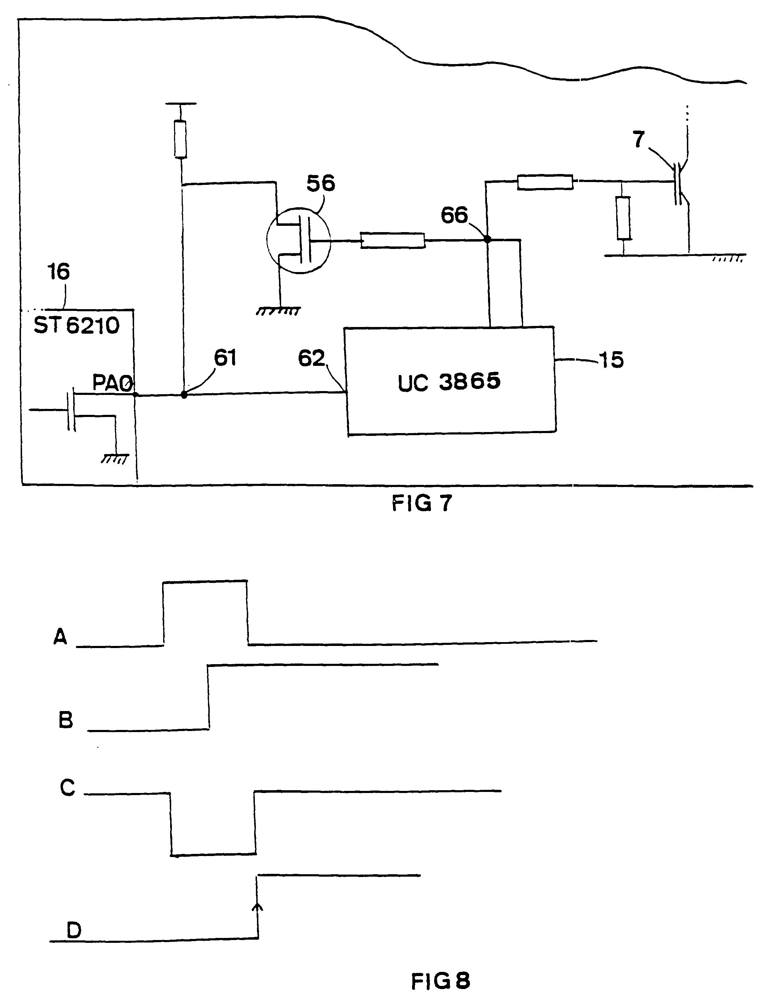

- la figure 7 est un schéma détaillé du circuit électronique de commande marche-arrêt des modules M₃ et M₄.
- la figure 8 montre des tracés de signaux illustrant la synchronisation de l'arrêt du générateur.

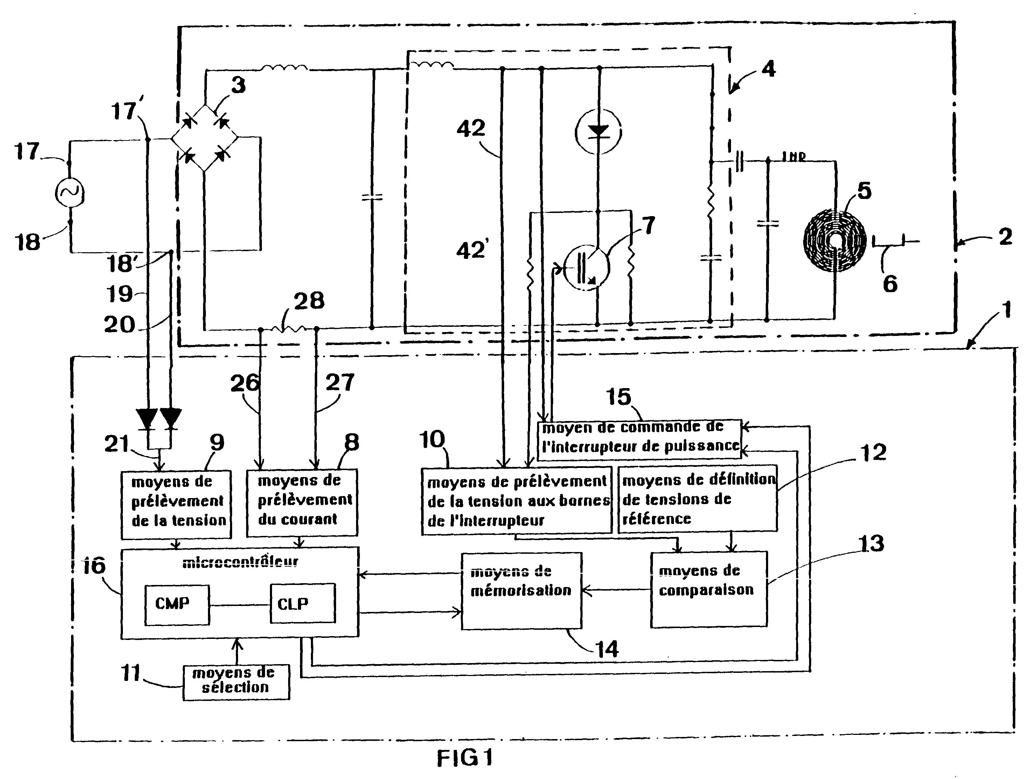

Sur la figure 1 est représenté un dispositif de commande et de contrôle de puissance 1 destiné à un générateur haute fréquence 2 connu en soi branché aux bornes 17 et 18 d'un réseau de tension alternative et comprenant un pont redresseur de tension 3, un circuit oscillant 4 incorporant une bobine de chauffage 5 d'une charge 6 par induction et un interrupteur électronique de puissance 7 du type IGBT par exemple. Un tel générateur haute fréquence est par exemple incorporé à une plaque de cuisson destinée à recevoir des charges différentes telles que poêles, casseroles, etc.

Ledit dispositif 1 comporte des moyens 8 de prélèvement du courant situés en aval du pont 3 et des moyens 9 de prélèvement de la tension branchées aux points 17' et 18' reliés aux bornes 17 et 18 du réseau d'alimentation dudit générateur haute fréquence 2, des moyens 10 de prélèvement de la tension aux bornes de l'interrupteur électronique de puissance 7, un moyen de sélection 11 par l'utilisateur de la puissance affichée à prélever aux bornes du réseau, des moyens 12 de définition de tensions de références prédéterminées, des moyens de comparaison 13 destinés à comparer la tension prélevée aux bornes de l'interrupteur électronique de puissance 7 avec lesdites tensions de références prédéterminées et associés à des moyens de mémorisation 14 destinés à mémoriser temporairement le résultat de ladite comparaison, un moyen de commande 15 de la commutation de l'interrupteur électronique de puissance 7 du type UC 3865 UNITRODE par exemple et un microcontrôleur 16 du type ST 6210 de la Société THOMSON par exemple destiné à piloter ledit moyen de commande 15 de l'interrupteur électronique de puissance 7.

Selon l'invention, le microcontrôleur 16 utilisé dans le dispositif électronique de commande et de contrôle comporte des moyens de calcul CLP de la puissance moyenne absorbée par le générateur haute fréquence 2 et des moyens de comparaison CMP en vue de comparer la puissance moyenne calculée par lesdits moyens de calcul CLP avec la puissance affichée par l'utilisateur à l'aide des moyens de sélection 11.

Comme cela sera expliqué plus loin, les moyens 8 de prélèvement du courant et les moyens 9 de prélèvement de la tension fournissent respectivement au micro-contrôleur 16 des tensions représentant respectivement une image du courant d'alimentation du générateur haute fréquence 2 variant entre 0 Volt et 5 Volts, et une image de la tension d'alimentation dudit générateur haute fréquence 2 variant entre 0 V et 5 Volts. Lesdites images du courant et de tension sont ensuite envoyées respectivement aux ports PB6 et PB7 de conversion analogique-numérique du microcontrôleur 16. Les données numériques obtenues après cette conversion analogique-numérique sont ensuite transférées dans des registres internes au micro-contrôleur constituant les moyens de calcul de puissance CLP et dans lesquels s'effectuent le calcul de la puissance moyenne absorbée par le générateur haute fréquence 2 selon un programme incorporé dans la mémoire dudit microcontrôleur 16. Cette opération est effectuée en 280 microsecondes à chaque intervalle de temps de 10 microsecondes. La valeur de puissance moyenne calculée est ensuite transférée vers des registres internes du microcontrôleur 16 constituant des moyens de comparaison de puissance CMP dans lesquels ladite puissance moyenne calculée est comparée à la puissance sélectionnée par l'utilisateur envoyée audit microcontrôleur par l'intermédiaire des moyens de sélection 11 constitués par un bus de données de type I²C.

Ceci permet de déclencher, la régulation de puissance à chaque passage par zéro de la tension d'alimentation délivrée par le secteur, et à la suite de la comparaison de la puissance moyenne calculée par les moyens de calcul CLP du microcontrôleur 16, avec la puissance affichée par l'utilisateur. De cette façon, toute fluctuation de la tension ou du courant d'alimentation à l'entrée du générateur haute fréquence 2 ou toute fluctuation simultanée de ces deux grandeurs sera détectée et sera prise en compte par le microcontrôleur 16. Par conséquent, la régulation effectuée à l'aide du dispositif selon l'invention permet d'obtenir la puissance effective affichée par l'utilisateur, avec une grande sécurité contre les surtensions pouvant endommager l'interrupteur électronique de puissance 7 et quelles que soient les fluctuations de la tension d'alimentation du secteur, le type et la dimension de la charge à chauffer.

L'interrupteur électronique de puissance 7 est commandé par un moyen de commande 15 relié au micro-contrôleur, et comportant un générateur de fréquence intégré et un circuit de commande de gâchette intégré et synchronisé sur l'extinction naturelle du courant du secteur ledit circuit de commande 15 étant destiné à fournir des signaux de commande de commutation à l'interrupteur électronique de puissance 7.

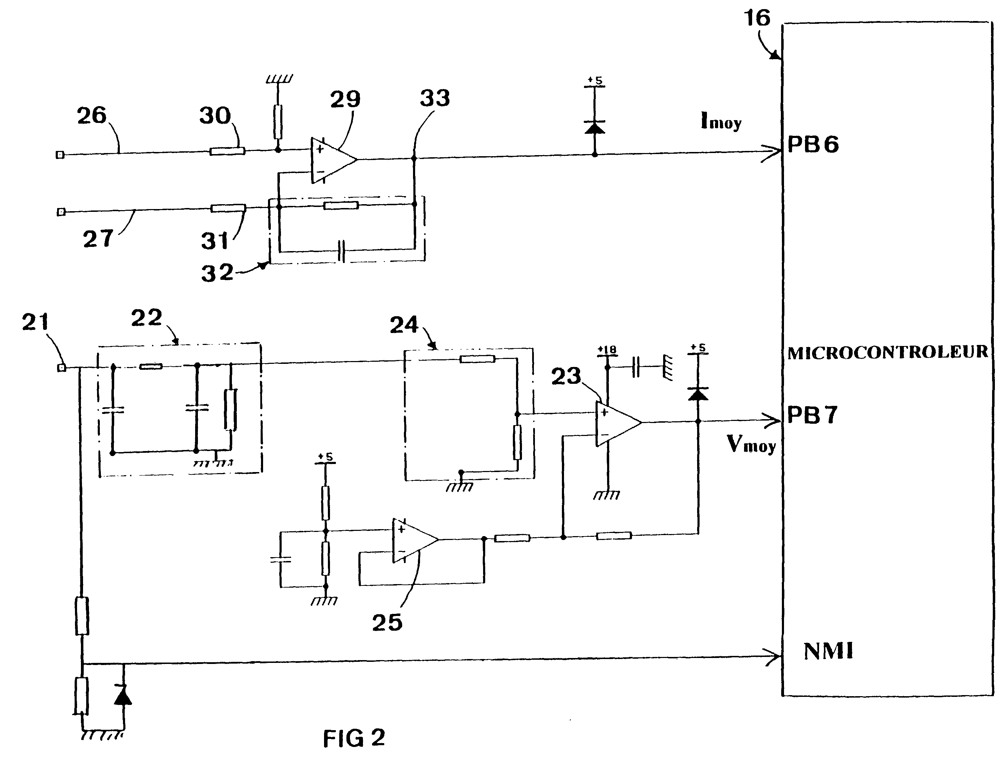

Comme on peut le voir sur les schémas représentés aux figures 1 et 2, la tension d'alimentation du générateur haute fréquence 2 est prélevée aux points 17' et 18' en amont du pont 3 à l'aide de deux fils 19 et 20. Ces fils sont reliés à l'entrée 21 d'un filtre atténuateur 22 dont les composants sont choisis de telle sorte que sa fréquence de coupure soit inférieure à 50 Hz. La sortie dudit filtre 22 est ensuite reliée à l'entrée de l'amplificateur opérationnel 23 à travers un pont résistif 24. L'entrée négative de l'amplificateur opérationnel 23 est reliée à la sortie d'un deuxième amplificateur opérationnel 25, et la sortie dudit amplificateur opérationnel 23 est reliée à un premier port PB7 de conversion analogique numérique du microcontrôleur 16. Parallèlement au prélèvement de la tension d'alimentation, le courant d'alimentation du générateur haute fréquence est prélevé en aval du pont 3 à l'aide de deux fils 26 et 27 aux bornes d'une résistance de faible valeur 28 montée en série avec la bobine de chauffage 5.

Comme représenté à la figure 2, le premier fil 26 est ensuite relié à l'entrée positive d'un amplificateur opérationnel 29 à travers une résistance 30. Le deuxième fil 27 est relié à l'entrée négative dudit amplificateur opérationnel 29 à travers une résistance 31. Un filtre RC 32 est monté en contre-réaction sur l'amplificateur opérationnel 29. La sortie 33 de l'amplificateur opérationnel 29 est reliée à un deuxième port PB6 de conversion analogique numérique du microcontrôleur 16.

On va décrire maintenant au regard de la figure 4, les moyens de comparaison 13 et les moyens de mémorisation 14 constituant le module M₂. Lesdits moyens de comparaison sont constitués de quatre comparateurs 34, 35, 36 et 37 et lesdits moyens de mémorisation sont constitués de deux bascules RS 48 et 51.
- l'entrée négative du comparateur 34 est reliée à l'interrupteur électronique de puissance 7 tandis que l'entrée positive dudit comparateur 34 est: reliée à un moyen de définition de tension de référence P₁ constitué par les résistances 38, 39, 40 et le condensateur 41 en parallèle avec la résistance 40 ;
- les entrées positives respectives des comparateurs 35, 36 et 37 sont également reliées à l'interrupteur électronique de puissance 7 par un fil 42 tandis que leurs entrées négatives sont respectivement reliées aux moyens 12 de définition de tension de référence constitués par les résistances P₂, P₃ et P₄ ;
- les sorties respectives des comparateurs 34 et 36 sont reliées respectivement à travers les diodes 46 et 47 à l'entrée S de la bascule RS 48, dont l'entrée R reçoit un signal de remise à zéro du microcontrôleur 16 à travers le port PB5. La sortie 43 de ladite bascule 48 est reliée au microcontrôleur 16 au port PB4. Les sorties des comparateurs 35 et 37 sont reliées respectivement à travers les diodes 49 et 50 à l'entrée S de la bascule RS 51 dont l'entrée R reçoit un signal de remise à zéro du micro-contrôleur 16 à travers le port PB5. La sortie 60 de ladite bascule 51 est reliée au microcontrôleur 16 au port PB3.

Lesdits moyens de comparaison 13 et de mémorisation 14 fournissent des signaux de limitation de la puissance absorbée par le générateur 2, des signaux de mise en sécurité de l'interrupteur électronique de puissance 7 et des signaux de reconnaissance de présence ou d'absence de charge, par exemple une casserole, à la sortie dudit générateur haute fréquence 2.

Sur la figure 6 est illustré le schéma détaillé du module M₄ destiné à commander la commutation de l'interrupteur électronique de puissance 7. Ce module M₄ comporte le circuit de commande 15 dudit interrupteur électronique de puissance 7, un filtre 53 qui a pour entrée E₁ et pour sortie S₁, un circuit 54 destiné à régler la gamme de fréquence du générateur de fréquence du circuit de commande 15, un circuit RC 55 destiné à fixer la durée maximale de conduction de l'interrupteur électronique de puissance 7, un transistor 56 destiné à interdire l'arrêt du fonctionnement de l'induction pendant une période de conduction de l'interrupteur électronique de puissance 7 et un circuit 57 destiné à polariser l'entrée de synchronisation du circuit de commande 15.

Nous allons maintenant décrire le fonctionnement du dispositif selon l'invention en nous référant aux schémas qui viennent d'être décrits.

Comme représenté aux figures 1 et 2, le courant prélevé à l'entrée du générateur haute fréquence 2 est converti en tension à l'aide de la résistance de faible valeur 28. Cette tension est ensuite envoyée à l'aide des fils 26 et 27 à l'amplificateur 29 à travers les résistances 30 et 31.

Le filtre 32 permet d'obtenir la valeur moyenne de ladite tension. Au point 33, on obtient une valeur de tension représentant une image du courant d'alimentation et qui varie entre 0 et 5V. Cette tension est ensuite envoyée à une première entrée, port PB6, de conversion analogique-numérique du microcontrôleur 16.

Parallèlement, la tension d'alimentation du générateur haute fréquence 2 prélevée aux points 17 et 18 est envoyée à l'entrée 21 d'un filtre atténuateur moyenneur 22. La tension atténuée est ensuite envoyée à travers un pont diviseur de tension 24 à l'entrée positive de l'amplificateur opérationnel 23 monté en amplificateur en mode différentiel. L'entrée négative dudit amplificateur opérationnel 23 reçoit une tension de référence obtenue à l'aide de l'amplificateur opérationnel 25 afin d'obtenir une tension de référence de telle manière que la tension moyenne de sortie dudit amplificateur 23 varie entre 0V et 5V consécutivement à la variation de la tension d'alimentation délivrée par le réseau entre la valeur minimale et la valeur maximale de la fluctuation permise de ladite tension de secteur.

La tension moyenne de sortie de l'amplificateur 23 est ensuite envoyée à une deuxième entrée, port PB7, de conversion analogique-numérique du micro-contrôleur.

Par ailleurs, comme on le voit à la figure 4, les comparateurs 35, 36 et 37 reçoivent à leurs entrées positives respectives, la tension positive aux bornes de l'interrupteur électronique de puissance 7, tandis que leurs entrées négatives respectives reçoivent des tensions de référence préalablement fixées par les moyens de définitions de tensions de référence P₂, P₃ et P₄. Le comparateur 35 comportant par construction et de manière connue en soi un transistor de sortie dont le collecteur est ouvert, et le port PA3 du microcontrôleur 16 étant configuré en drain ouvert, on réalise ainsi une fonction logique ET au point de jonction 59 dudit comparateur et dudit port PA3. De cette manière, la tension au point 59 est au niveau haut uniquement si les deux conditions suivantes sont réunies simultanément :
- d'une part, la tension à l'entrée positive du comparateur 35 est supérieure à la tension de référence prédéterminée appliquée à l'entrée négative dudit comparateur 35, ce qui indique que la tension aux bornes de l'interrupteur électronique 7 est supérieure à la valeur de référence prédéterminée et,
- d'autre part, la tension délivrée par le port PA3 du microcontrôleur est au niveau haut. Par ailleurs, le passage à un niveau haut du port PA3 est synchronisé par programmation avec le passage de la tension d'alimentation du générateur 2 par zéro.

On en conclut que la tension au point 58 qui est le point de jonction des sorties des comparateurs 35 et 37, et qui est relié à l'entrée de la bascule 51 est déterminée par :
- l'existence d'une surtension aux bornes de l'interrupteur électronique de puissance 7 qui se traduit par un niveau haut à la sortie du comparateur 37 ou,
- la détection de l'absence d'une charge ou de son enlèvement de la bobine 5 au moment où le microcontrôleur 16 envoie un niveau haut par le port PA3. Ladite détection de la présence ou de l'absence de charge se fait dès la mise en marche du dispositif et est: synchronisée avec l'envoi du signal haut par le port PA3 du micro-contrôleur 16.

En effet, l'entrée négative du comparateur 35 reçoit une image de la tension limite inférieure de fluctuation de la tension d'alimentation du secteur, et qui constitue le niveau de détection de présence ou d'absence de charge, tandis que l'entrée positive dudit comparateur reçoit une tension dont les variations autour dudit niveau de détection dépendent d'une part de la présence ou de l'absence de charge et d'autre part de la nature du matériau à chauffer. En l'absence de charge sur la bobine 5 ou si la charge est constituée d'un matériau inadapté tel que l'aluminium ou le cuivre par exemple, la tension est supérieure audit niveau de détection, ce qui provoque le basculement de la sortie du comparateur 35 à un niveau haut. Tandis qu'en présence de charge la tension à l'entrée positive du comparateur 35 est inférieure audit niveau de détection appliqué à l'entrée négative du comparateur 35, ceci provoque le basculement de la sortie dudit comparateur à un niveau bas. L'opération de détection de présence ou d'absence de charge ainsi que la vérification des tensions limites sont synchronisées avec un signal généré par le microcontrôleur 16 et envoyée au moyen de commande 15 de l'interrupteur de puissance 7 par le port PA3. Dans le cas d'absence de charge ou de présence d'une charge constituée d'un matériau inadapté, l'arrêt du fonctionnement est ordonné par un signal d'arrêt émanant du microcontrôleur 16 à travers le port PAO et envoyé audit moyen 15 de commande de l'interrupteur de puissance 7. Cet arrêt est obtenu 50 microsecondes après la mise en marche du dispositif par l'utilisateur.

Par ailleurs, ledit port PA0 est relié au transistor 56 qui est commandé par le circuit de commande 15 de l'interrupteur électronique de puissance 7 comme cela est montré à la figure 7 et fournit par conséquent une information sur l'état de conduction ou de blocage dudit interrupteur électronique de puissance 7. Le port PA0 et le transistor 56 réalisent une fonction ET logique à leur point de jonction 61 comme on peut le voir à la figure 7. D'autre part, l'entrée 62 du circuit de commande M₄ de l'interrupteur électronique de puissance 7 étant reliée audit point de jonction 61, le fonctionnement dudit module M₄ s'arrête lorsque la tension à l'entrée 62 est supérieure à 3 V. Comme cela peut se comprendre aisément sur la figure 7, le niveau logique de l'entrée 62 du circuit de commande 15 représenté par D ne passe à un niveau haut que si l'interrupteur électronique de puissance 7 est ouvert. Cette condition est réalisée par la fonction logique ET obtenue au point 61. Ceci permet d'éviter une coupure brutale du courant dans le générateur de puissance 2 et permet également de différer l'arrêt de l'induction après la dernière période de conduction de l'interrupteur électronique de puissance 7.

A la figure 8, nous avons représenté le signal A de commande de la gâchette de l'interrupteur électronique de puissance 7 relevé au point 66, le signal B représente le niveau de sortie du port PAO du microcontrôleur 16, le signal C relevé au point 61 est le complémentaire du signal A et le signal D le résultat de la fonction logique ET entre le signal B et le signal C.

Comme nous l'avons signalé au début de cette description, et en se reportant à la figure 4 les sorties du comparateur 34 et 36 sont reliées respectivement à des diodes 46 et 47 dont les cathodes respectives sont reliées à l'entrée S de la bascule RS 48. La tension au point de jonction 63 des cathodes desdites diodes 46 et 47 et par conséquent la tension à l'entrée de la bascule RS 48 sera au niveau haut si l'une au moins des conditions suivantes est réalisée :
- la tension de sortie du comparateur 34 est au niveau haut, ce qui indique la présence d'une surtension sur l'interrupteur de puissance 7, ou
- la tension de sortie du comparateur 36 est au niveau haut, ce qui indique un dépassement de la tension de référence préalablement sélectionnée à l'entrée négative dudit comparateur 36.

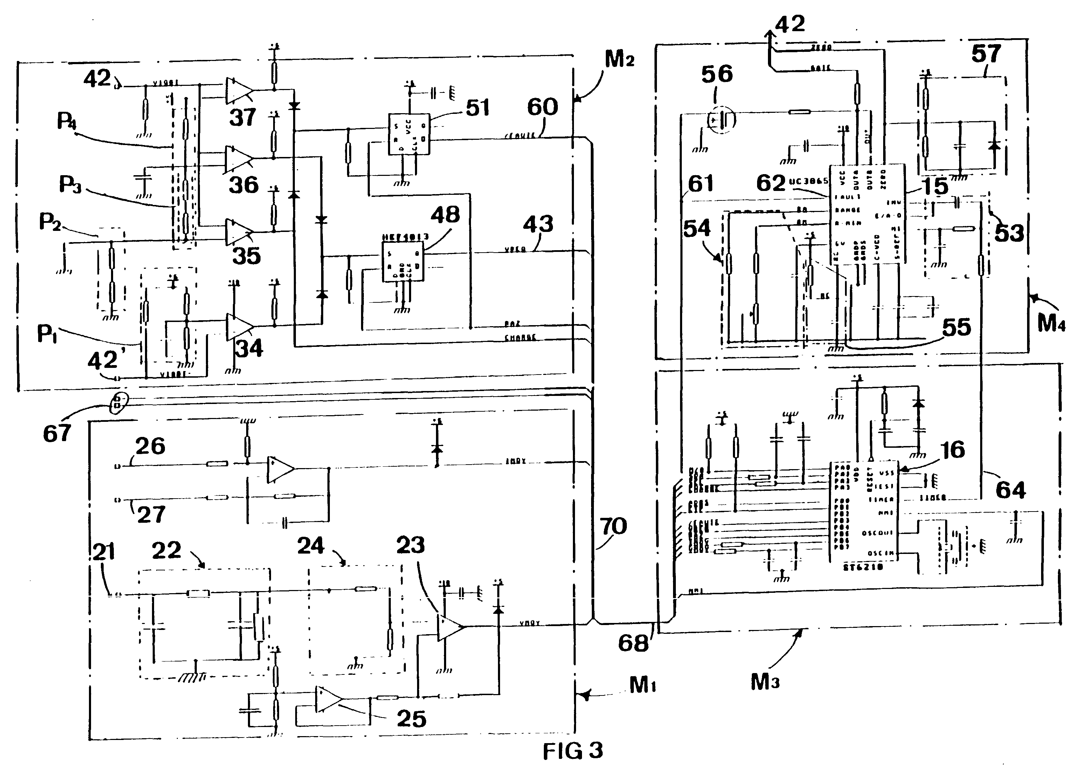

Dans les deux cas, la bascule 48 envoie sur le port PB4 du microcontrôleur 16 par la sortie 43 un signal de demande de régulation. A la réception des signaux provenant des bascules 48 et 51, le microcontrôleur 16 envoie par sa sortie 64 (figure 3) au circuit de commande 15 un signal S de modulation de largeur d'impulsion. Le signal S de commutation envoyé par le moyen 15 de commande à l'interrupteur de puissance 7 est modulé en fréquence par ledit signal de modulation de largeur d'impulsion généré par le microcontrôleur 16 et envoyé audit moyen 15 de commande de commutation de l'interrupteur de puissance 7. Ledit signal envoyé par le microcontrôleur 16 attaque l'entrée E₁ du filtre 53 représenté sur la figure 6. Ledit filtre fournit à sa sortie S₁ une valeur moyenne du signal de modulation de largeur d'impulsion qui est destinée à commander le générateur de fréquence intégré du circuit 15 de commande de l'interrupteur 7.

La régulation de puissance se fait par le réglage du rapport cyclique du signal de modulation de largeur d'impulsion envoyé par le microcontrôleur 16 qui a pour effet de régler la fréquence fournie par le générateur de fréquence intégré du circuit de commande 15 de l'interrupteur électronique de puissance 7.

Avec la structure décrite ci-dessus, on va décrire maintenant le procédé de mise en oeuvre du dispositif selon l'invention permettant de réaliser la commande et le contrôle automatique de puissance pour un générateur haute fréquence utilisant un signal de modulation de largeur d'impulsion envoyé par le microcontrôleur 16 au circuit de commande 15 de l'interrupteur électronique de puissance 7 selon les étapes suivantes :
a) Prélèvement du courant et de la tension d'alimentation du générateur haute fréquence 2 ;
b) Calcul de la puissance moyenne absorbée par le générateur haute fréquence 2 ;
c) Envoi au microcontrôleur 16 de la puissance sélectionnée par l'utilisateur ;
d) Comparaison de la puissance moyenne absorbée par le générateur haute fréquence 2 et calculée par les moyens de calcul du microcontrôleur 16 avec la valeur de puissance sélectionnée par l'utilisateur ;
e) Vérification des tensions limites positives et négatives aux bornes de l'interrupteur électronique de puissance 7 ;
f) Pilotage du moyen de commande 15 de l'interrupteur électronique de puissance 7.

Le prélèvement du courant et de la tension d'alimentation du générateur haute fréquence 2 est obtenu à l'aide des circuits 8 et 9 comme cela a été expliqué précédemment et envoyé à travers les fils 68 et 70 au microcontrôleur 16.

Le calcul de la puissance moyenne absorbée par le générateur 2 est effectué par les moyens de calcul CLP du microcontrôleur 16. Le moyen de sélection 11 relié au microcontrôleur par un bus de données de type I²C 67 permet à l'utilisateur de choisir la puissance de chauffage, celle-ci va être comparée à la puissance moyenne calculée par le microcontrôleur 16. Le résultat de cette comparaison va déclencher le pilotage du moyen de commande 15 comme cela a été expliqué précédemment.

Grâce au dispositif et au procédé selon l'invention, on réalise une commande et un contrôle de la puissance fournie à une charge qui se caractérise par une grande fiabilité, dans la mesure où l'on tient compte aussi bien des fluctuations du courant et de la tension pouvant survenir dans l'alimentation du générateur haute fréquence 2, que des dimensions de l'ustensile de cuisine (grand diamètre, petit diamètre) contenant les aliments à chauffer.

## Revendications

1. Dispositif électronique de commande et de contrôle automatiques de puissance (1) pour un générateur haute fréquence (2) qui comprend un pont redresseur (3) de tension, un circuit oscillant (4) incorporant une bobine de chauffage par induction (5) d'une charge (6) et un interrupteur électronique de puissance (7), ledit dispositif comportant en outre des moyens (8) de prélèvement du courant situé en aval dudit pont redresseur (3), des moyens (9) de prélèvement de la tension branchée aux bornes du réseau d'alimentation dudit générateur haute fréquence (2), des moyens (10) de prélèvement de la tension aux bornes de l'interrupteur électronique de puissance (7), un moyen de sélection (11) par l'utilisateur de la puissance affichée à prélever aux bornes du réseau, des moyens (12) de définition de tensions de référence prédéterminées, des moyens (13) de comparaison destinés à comparer la tension prélevée aux bornes de l'interrupteur électronique de puissance (7) avec lesdites tensions de références prédéterminées et associés à des moyens de mémorisation (14) destinés à mémoriser temporairement le résultat de ladite comparaison, un moyen de commande (15) de la commutation de l'interrupteur électronique de puissance (7), et un microcontrôleur (16) destiné à piloter ledit moyen de commande (15) de l'interrupteur électronique de puissance (7), **caractérisé en ce que** le microcontrôleur (16) comporte des moyens de calcul CLP de la puissance moyenne absorbée par le générateur haute fréquence (2) et des moyens de comparaison de puissance CMP en vue de comparer la puissance moyenne calculée par lesdits moyens de calcul CLP avec la puissance affichée par l'utilisateur par le moyen de sélection (11).

2. Dispositif électronique de commande et de contrôle automatiques de puissance pour un générateur haute fréquence selon la revendication 1,
**caractérisé en ce que** le moyen de commande (15) est relié au microcontrôleur et comporte un générateur de fréquence intégré et un circuit de commande de gâchette intégrée et synchronisée avec l'extinction naturelle du courant du secteur ledit circuit de commande 15 étant destiné à fournir des signaux de commande de commutation à l'interrupteur électronique de puissance 7.

3. Dispositif électronique de commande et de contrôle automatiques de puissance pour un générateur haute fréquence selon les revendications 1 ou 2,
**caractérisé en ce que** les moyens de mémorisations (14) fournissent au microcontrôleur (16) des signaux de limitation de la puissance absorbée par le générateur haute fréquence (2), des signaux de mise en sécurité de l'interrupteur électronique de puissance (7) et des signaux de reconnaissance de présence ou d'absence de charge à la sortie dudit générateur haute fréquence (2).

4. Dispositif électronique de commande et de contrôle automatiques de puissance pour un générateur haute fréquence selon l'une quelconque des revendications précédentes,
**caractérisé en ce que** les moyens (8) de prélèvement du courant et les moyens (9) de prélèvement de la tension fournissent respectivement au microcontrôleur (16) des tensions représentant respectivement une image du courant d'alimentation du générateur haute fréquence (2) variant entre 0 Volts et 5 Volts, et une image de la tension d'alimentation dudit générateur haute fréquence (2) variant entre 0 Volts et 5 Volts.

5. Dispositif électronique de commande et de contrôle automatiques de puissance pour un générateur haute fréquence selon l'une quelconque des revendications précédentes,
**caractérisé en ce que** le moyen de commande (15) envoie à l'interrupteur électronique de puissance (7) un signal de commande de commutation modulé en fréquence par un signal de modulation de largeur d'impulsion généré par le micro-contrôleur et envoyé audit moyen de commande (15) de l'interrupteur électronique de puissance (7).

6. Procédé de commande et de contrôle automatiques de puissance pour un générateur haute fréquence selon la revendication 1,
**caractérisé en ce qu**'il comporte les étapes suivantes :
a) Prélèvement du courant et de la tension d'alimentation du générateur haute fréquence (2) ;
b) Calcul de la puissance moyenne absorbée par le générateur haute fréquence (2) ;
c) Envoi au microcontrôleur (16) de la puissance sélectionnée par l'utilisateur ;
d) Comparaison de ladite puissance absorbée par le générateur haute fréquence (2) avec la valeur de ladite puissance sélectionnée par l'utilisateur ;
e) Vérification des tensions limites positives et négatives aux bornes de l'interrupteur électronique de puissance (7) ;
f) Pilotage du moyen de commande (15) de l'interrupteur électronique de puissance (7).

7. Procédé de commande et de contrôle automatiques de puissance pour un générateur haute fréquence selon la revendication 6,
**caractérisé en ce que** le microcontrôleur (16) comporte des moyens de réglage du rapport cyclique du signal de modulation de largeur d'impulsion en vue de régler la fréquence fournie par le générateur de fréquence intégré du circuit de commande (15) de l'interrupteur électronique de puissance (7).

## Patentansprüche

1. Elektronische Vorrichtung zur automatischen Steuerung und Regelung der Leistung (1) für einen Hochfrequenzgenerator (2) mit einer Spannungsgleichrichterbrücke (3), einem Schwingkreis (4), der eine Induktionsheizspule (5) für eine Last (6) und einen elektronischen Leistungsschalter (7) aufweist, wobei die Vorrichtung außerdem eine Vorrichtung (8) zur Stromabnahme, die stromabwärts von der Gleichrichterbrücke (3) angeordnet ist, eine Vorrichtung (9) zur Spannungsabnahme, die an den Klemmen des Speisenetzes des Hochfrequenzgenerators (2) angeschlossen ist, eine Vorrichtung (10) zur Abnahme der Spannung an den Klemmen des elektronischen Leistungsschalters (7), eine Wahlvorrichtung (11), durch welche der Benutzer die an den Klemmen des Netzes abzunehmende angezeigte Leistung wählt, eine Vorrichtung (12) zur Festlegung von vorbestimmten Bezugsspannungen, eine Vergleichsvorrichtung (13) zum Vergleichen der an den Klemmen des elektronischen Leistungsschalters (7) abgenommenen Spannung mit den vorbestimmten Bezugsspannungen, die mit einer Speichervorrichtung (14) zusammenwirkt, um vorübergehend das Ergebnis dieses Vergleichs zu speichern, einer Steuervorrichtung (15) der Umschaltung des elektronischen Leistungsschalters (7) und einem Mikroregler (16) zur Regelung der Steuervorrichtung (15) des elektronischen Leistungsschalters (7) aufweist, **dadurch gekennzeichnet, daß** der Mikroregler (16) eine Rechenvorrichtung CLP zur Berechnung der vom Hochfrequenzgenerator (2) aufgenommenen mittleren Leistung und cine Vergleichsvorrichtung CMP für die Leistung, welche zum Vergleichen der von der Rechenvorrichtung CLP berechneten mittleren Leistung mit der vom Benutzer durch die Wahlvorrichtung (11) angegebenen Leistung dient, aufweist.

2. Elektronische Vorrichtung zur automatischen Steuerung und Regelung der Leistung für einen Hochfrequenzgenerator nach Anspruch 1, **dadurch gekennzeichnet, daß** die Steuervorrichtung (15) mit dem Mikroregler verbunden ist und einen integrierten Frequenzgenerator und einen Torsteuerkreis zur integrierten und mit der natürlichen Löschung des Netzstroms synchronisierten Steuerung aufweist, wobei der Steuerkreis (15) dazu dient, dem elektronischen Leistungsschalter (7) Befehlssignale zur Umschaltung zu liefern.

3. Elektronische Vorrichtung zur automatischen Steuerung und Regelung der Leistung für einen Hochfrequenzgenerator nach den Ansprüchen 1 oder 2, **dadurch gekennzeichnet, daß** die Speichervorrichtung (14) dem Mikroregler (16) Signale zur Begrenzung der vom Hochfrequenzgenerator (2) aufgenommenen Leistung, Signale zur Sicherung des elektronischen Leistungsschalters (7) und Signale zur Erkennung der Anwesenheit oder Abwesenheit von Last am Ausgang des Hochfrequenzgenerators (2) liefert.

4. Elektronische Vorrichtung zur automatischen Steuerung und Regelung der Leistung für einen Hochfrequenzgenerator nach einem der vorangehenden Ansprüche, **dadurch gekennzeichnet, daß** die Vorrichtung (8) zur Stromabnahme und die Vorrichtung (9) zur Spannungsabnahme jeweils dem Mikroregler (16) Spannungen liefern. welche jeweils eine Abbildung des Speisestroms des Hochfrequenzgenerators (2), die zwischen 0 Volt und 5 Volt wechselt, und eine Abbildung der Speisespannung des Hochfrequenzgenerators (2). die zwischen 0 Volt und 5 Volt wechselt, wiedergeben.

5. Elektronische Vorrichtung zur automatischen Steuerung und Regelung der Leistung für einen Hochfrequnezgenerator nach einem der vorangehenden Ansprüche, **dadurch gekennzeichnet, daß** die Steuervorrichtung (15) dem elektronischen Leistungsschalter (7) ein Signal zur Steuerung der Umschaltung liefert, das frequenzmoduliert ist durch ein Signal zur Modulation der Impulsgröße, das vom Mikroregler erzeugt und der Steuervorrichtung (15) des elektronischen Leistungsschalters (7) zugeleitet wird.

6. Verfahren zur automatischen Steuerung und Regelung der Leistung für einen Hochfrequenzgenerator nach Anspruch 1, **dadurch gekennzeichnet, daß** es die folgenden Stufen aufweist:
a) Abnahme des Stroms und der Spannung zur Speisung des Hochfrequenzgenerators (2);
b) Berechnung der vom Hochfrequenzgenerator (2) aufgenommenen mittleren Leistung;
c) Weiterleitung der vom Benutzer gewählten Leistung an den Mikroregler (16);
d) Vergleich der vom Hochfrequenzgenerator aufgenommenen Leistung mit dem Wert der vom Benutzer gewählten Leistung;
e) Verifizierung der positiven und negativen Spannungen an den Klemmen des elektronischen Leistungsschalters (7);
f) Steuerung der Steuervorrichtung (15) des elektronischen Leistungsschalters (7).

7. Verfahren zur automatischen Steuerung und Regelung der Leistung für einen Hochfrequenzgenerator nach Anspruch 6, **dadurch gekennzeichnet, daß** der Mikroregler (16) eine Regelvorrichtung für das zyklische Verhältnis des Signals der Modulation der Größe des Impulses aufweist, um die Frequenz zu regeln, die von dem in den Steuerkreis (15) des elektronischen Leistungsschalters (7) integrierten Frequenzgenerator geliefert wird.

## Claims

1. Electronic device (1) for automatic actuation and control of power for a high-frequency generator (2) which comprises a bridge voltage rectifier (3), an oscillating circuit (4) incorporating an induction heating coil (5) for a load (6) and an electronic power switch (7), the said device also having means (8) of taking off the current situated downstream of the said bridge rectifier (3), means (9) of taking off the voltage connected to the terminals of the supply network of the said high-frequency generator (2), means (10) of taking off the voltage at the terminals of the electronic power switch (7), a means (11) of selection by the user of the displayed power to be taken off at the terminals of the network, means (12) of defining predetermined reference voltages, comparison means (13) intended to compare the voltage taken off at the terminals of the electronic power switch (7) with the said predetermined reference voltages and associated with storage means (14) intended to temporarily store the result of the said comparison, a means (15) of controlling the switching of the electronic power switch (7), and a microcontroller (16) intended to control the said means (15) of controlling the electronic power switch (7), **characterised in that** the microcontroller (16) has means CLP of calculating the mean power absorbed by the high-frequency generator (2) and means CMP of comparing power with a view to comparing the mean power calculated by the said calculation means CLP with the power displayed by the user by means of the selection means (11).

2. Electronic device for automatic actuation and control of power for a high-frequency generator according to Claim 1, **characterised in that** the control means (15) is connected to the microcontroller and has an integrated frequency generator and a gate control circuit integrated and synchronised with the natural extinction of the mains current, the said control circuit 15 being intended to supply switching control signals to the electronic power switch 7.

3. Electronic device for automatic actuation and control of power for a high-frequency generator according to Claims 1 or 2, **characterised in that** the storage means (14) supply to the microcontroller (16) signals for limiting the power absorbed by the high-frequency generator (2), signals for setting the electronic power switch (7) to safety and signals for recognising the presence or absence of a load at the output from the said high-frequency generator (2).

4. Electronic device for automatic actuation and control of power for a high-frequency generator according to any one of the preceding claims, **characterised in that** the means (8) of taking off the current and the means (9) of taking off the voltage supply respectively to the microcontroller (16) voltages representing respectively an image of the supply current for the high-frequency generator (2) varying between 0 volts and 5 volts, and an image of the supply voltage of the said high-frequency generator (2) varying between 0 volts and 5 volts.

5. Electronic device for automatic actuation and control of power for a high-frequency generator according to any one of the preceding claims, **characterised in that** the control means (15) sends to the electronic power switch (7) a switching control signal modulated for frequency by a pulse width modulation signal generated by the microcontroller and sent to the said control means (15) for the electronic power switch (7).

6. Method for automatic actuation and control of power for a high-frequency generator according to Claim 1, **characterised in that** it includes the following steps:
a) Taking off the current and supply voltage to the high-frequency generator (2);
b) Calculating the mean power absorbed by the high-frequency generator (2) ;
c) Sending to the microcontroller (16) the power selected by the user;
d) Comparing the said power absorbed by the high-frequency generator (2) with the value of the said power selected by the user;
e) Verifying the positive and negative limit voltages at the terminals of the electronic power switch (7) ;
f) Controlling the means (15) of controlling the electronic power switch (7).

7. Method for automatic actuation and control of power for a high-frequency generator according to Claim 6, **characterised in that** the microcontroller (16) has means of adjusting the cycle ratio of the pulse width modulation signal with a view to adjusting the frequency supplied by the integrated frequency generator of the control circuit (15) of the electronic power switch (7).
